# EUROPEAN PATENT APPLICATION

(11) **EP 2 695 765 A2**
(43) Date of publication of application: **12.02.2014**
(21) Application number: 12767582.5
(22) Date of filing: 06.04.2012
(51) Int. Cl.: B60L 11/18

(54) **ELECTRIC VEHICLE AND METHOD FOR CONTROLLING THE SPEED THEREOF**

(30) Priority: 07.04.2011 KR 20110032218
(71) Applicant: LG ELECTRONICS INC., Yeongdeungpo-gu, Seoul, 150-721 (KR)
(72) Inventor: PARK, Eun Ha, Incheon-si 407-050 (KR)
(74) Representative: Vossius & Partner
(86) International application number: PCT/KR2012/002627
(87) International publication number: WO 2012/138173

(57) **Abstract**

The present invention relates to an electric vehicle and to a method for controlling the speed thereof, wherein the degree of acceleration of the electric vehicle is controlled based on the rate of change in an accelerator or a brake during the operation of the electric vehicle, thereby more quickly increasing the speed during accelerating conditions and more quickly reducing the speed during decelerating conditions, thus enabling a driver to drive the vehicle in a more convenient manner.

## Description

### [Technical Field]

The present invention relates to an electric vehicle and a method for controlling the speed thereof, and more particularly to a method for controlling the speed of an electric vehicle in which the speed of the vehicle is dynamically controlled in response to change in the accelerator or the brake.

### [Background Art]

Research into electric vehicles has been actively conducted as electric vehicles are viewed as the most viable alternative vehicles to solve the problems of vehicle-induced pollution and energy scarcity.

Electric vehicles (EVs) are mainly powered by driving an AC or DC motor using power from a battery. The EVs are generally classified into battery-only EVs and hybrid EVs. Battery-only EVs drive a motor using the power from a battery, which is recharged when the electric power thereof is all consumed. Hybrid EVs charge the battery by operating an engine and generating electricity and use this electricity to drive the electric motor.

Hybrid EVs can further be classified into a serial type and a parallel type. The serial type hybrid EVs are vehicles that are always driven by a motor by converting mechanical energy output from an engine into electric energy through a generator and supplying this electric energy to a battery or the motor. Serial type hybrid EVs are formed by adding an engine and a generator to conventional EVs to increase range. Parallel type hybrid EVs can be driven by power from two power sources, i.e., can be driven by power from a battery or only by an engine (a gasoline engine or a diesel engine). Parallel type hybrid EVs can be driven by both the engine and the motor depending upon travel conditions.

In addition, with the development of motor/control technology, a system with high output power, compact size and high efficiency is under development. As the DC motor is changed to the AC motor, EVs have become competitive with gasoline vehicles, with great enhancement of output power and power performance (acceleration and top speed) of the EVs. In addition, with realization of lightweight and compact motors according to high-speed rotation through high output power, weight and volume of the EVs have been greatly reduced.

EVs are moved by controlling the motor. During driving of the EVs, the motor is controlled to change the driving state and to accelerate or decelerate the EVs.

EVs are accelerated by manipulation of an accelerator and decelerated by the brake. When the accelerator or the brake is manipulated, the EVs are accelerated or decelerated at a constant rate according to the extent of manipulation.

In the case of conventional EVs, the degree of acceleration or deceleration may not be changed according to conditions of a road around the EVs and driver preferences.

Some EVs may be provided with a function of increasing the speed when a certain mode is set. However, such a function is to drive the vehicle with a constant acceleration enhanced over the normal driving mode, not to consistently change the acceleration itself. Accordingly, these EVs have a limit to the speed control.

### [Disclosure]

### [Technical Problem]

Therefore, the present invention has been made in view of the above problems, and it is an object of the present invention to provide an electric vehicle and a method for controlling the speed thereof, wherein the speed of the vehicle is controlled by changing the degree of acceleration or deceleration of the vehicle according to manipulation of an accelerator or a brake.

### [Technical Solution]

In accordance with an aspect of the present invention, the above and other objects can be accomplished by the provision of an electric vehicle including an accelerator provided with an accelerator position sensor (APS), a brake provided with a break position sensor (BPS), a motor control unit to control driving of a motor to change a speed of the vehicle, and a mode key to input a signal for setting of a sports mode, a controller to control the speed of the vehicle by switching the vehicle, when the mode key is input, from a normal driving mode to the sports mode, changing a rate of change of torque according to an input signal from the APS or the BPS, and applying a calculated value of torque to the motor control unit according to the changed rate of torque, the rate of change of torque forming the basis of setting a value of torque.

In accordance with another aspect of the present invention, there is provided a method for controlling a speed of an electric vehicle including setting a sports mode, calculating, when a signal input from an accelerator position sensor (APS) of an accelerator or a break position sensor (BPS) of a brake is equal to or greater than a reference value, a rate of change of the APS or the BPS, changing, when the rate of change of the APS or the BPS is equal to or greater than a set value, the rate of change of torque according to the rate of change of the APS or the BPS, and setting a target torque according to the changed rate of change of torque to control the speed of the vehicle.

### [Advantageous Effects]

An electric vehicle and a method for controlling the speed thereof according to the present invention facilitate control of the speed of a vehicle through change in the degree of acceleration or deceleration by varying the rate of change of torque according to manipulation of an accelerator or a brake.

In addition, as the acceleration is changed, the speed of the vehicle can be freely adjusted according to conditions of a road around the vehicle or habits of a driver. Accordingly, dynamic speed control may be implemented by quickly increasing or reducing the speed even in the situation of rapid acceleration or deceleration.

### [Description of Drawings]

The above and other objects, features and other advantages of the present invention will be more clearly understood from the following detailed description taken in conjunction with the accompanying drawings, in which:
FIG. 1 is a block diagram schematically showing internal constituents of an electric vehicle according to one embodiment of the present invention;
FIG. 2 is a view illustrating change of speed in a normal driving mode and a sports mode of an electric vehicle according to one embodiment of the present invention;
FIG. 3 is a view illustrating change of speed of an electric vehicle according to one embodiment of the present invention, which is in the sports mode;
FIG. 4 is a flowchart illustrating operation of an electric vehicle, which is in the sports mode, according to one embodiment of the present invention; and
FIG. 5 is a flowchart illustrating a method of setting the rate of change of torque of an electric vehicle according to one embodiment of the present invention.

### [Best Mode]

Reference will now be made in detail to the preferred embodiments of the present invention, examples of which are illustrated in the accompanying drawings.

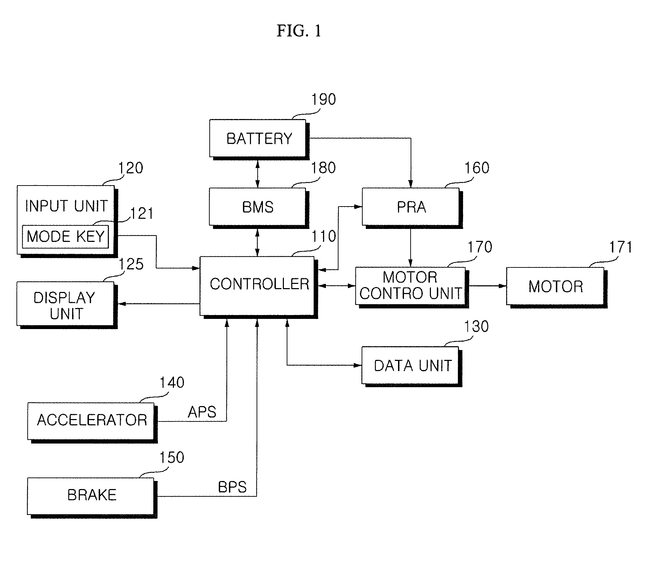

FIG. 1 is a block diagram schematically showing internal constituents of an electric vehicle (EV) according to one embodiment of the present invention.

As shown in FIG. 1, the EV according to the present invention includes an input unit 120, a data unit 130, a display unit 125, an accelerator 140, a brake 150, a motor control unit (MCU) 170, a PRA 160, a motor 171, a BMS 180, a battery 190, and a controller 110 to control overall operations of the vehicle including driving.

In addition, the EV includes a plurality of sensors (not shown) installed therein. Particularly, the EV may further include a speed sensor (not shown) to sense the speed of the vehicle. The vehicle is controlled as the data measured by each sensor is input to the controller 110.

Since the EV uses recharged electricity as a power source, the EV is, as discussed above, provided with the battery 190 configured with at least one battery cell. The battery of the EV is recharged by receiving, at a predetermined vehicle recharging station, a vehicle recharging facility or a home, external electrical power supplied thereto.

The battery 190 stores high-voltage electrical energy by being recharged, and supplies power to the vehicle.

The BMS (battery management system) 180 determines the remaining capacity and the necessity of recharge of the battery 190, and performs management operation related to supply of recharged current stored in the battery to each part of the EV.

At this time, the BMS 180 maintains a uniform difference in voltage between the cells in the battery in charging and using the battery such that the battery is not excessively charged or discharged, thereby extending the lifespan of the battery.

In addition, the BMS 180 allows the vehicle to travel for a long time by managing usage of electric current, and includes a protection circuit for the supplied current.

The PRA (power relay assembly) 160 includes a plurality of relays to switch a high voltage and a sensor, thereby applying or cutting off the high-voltage operational power from the battery 190 to a specific position.

Particularly, the PRA 160 applies the power from the battery 190 to the MCU 170 through switching of the relays to supply power necessary for operation of the motor 171. At this time, the PRA 160 applies or cuts off the power by switching the relays according to a control command from the controller 110.

The motor control unit (MCU) 170 generates a control signal for driving of at least one motor 171 connected thereto and applies the same to the motor 171. In addition, the MCU 170 changes the high-voltage power to suit the properties of the motor.

As the relays of the PRA 160 are switched, the MCU 170 controls the motor 171 with the high-voltage power applied thereto from the battery 190.

The MCU 170 controls driving of the motor 171 by changing a signal for control of the motor according to the control signal from the controller 110 and applying the changed signal to the motor 171. At this time, the MCU 170 controls the torque of the motor 171, thereby accelerating, decelerating, or stopping the vehicle.

The speed sensor may detect the current speed of the vehicle using the rate of rotation of the motor 171. In some cases, the speed sensor may include a GPS to sense the speed of the vehicle through change in position per hour.

The EV includes an input means manipulated by the driver to input a predetermined signal, an output means to output information during the current operation of the EV, and a manipulation means manipulated by the driver to control the vehicle.

The display unit 125, which is one of the output means of the EV, outputs the settings and operation states of the vehicle. Herein, the display unit 125 may include a display screen or a state indicator lamp.

In addition, the output means of the EV include a speaker, which outputs music, sound effects, and warning sounds, and also includes a turn signal lamp, a tail lamp, and a headlamp, which are turned on and off under control of the input unit 120.

The input unit 120, which is one of the input means of the EV, is configured with switches or buttons that are manipulated by the driver. According to manipulation of the switches or buttons, functions of the EV or a driving mode may be set, and the turn signal lamp, tail lamp, headlamp, and brush provided to the vehicle are operated.

The input unit 120 includes a mode key 121.

In controlling the speed of the vehicle, the mode key 121 sets a sports mode, in which the speed is not increased or decreased at a constant acceleration, but the rate of change of torque varies.

When the sports mode is set by manipulation of the mode key 121, acceleration of the vehicle is changed according to manipulation of the accelerator or the brake.

The accelerator 140 is a device to accelerate the vehicle according to a pressing action by the driver. When the accelerator 140 is manipulated, the APS (accelerator position sensor) provided to the accelerator senses the extent of manipulation of the accelerator and inputs the extent to the controller 110.

The brake 150 is a device to decelerate or stop the vehicle according to the pressing action by the driver. When the brake 150 is manipulated, the BPS (break position sensor) provided to the brake senses the extent of manipulation of the brake and inputs the same to the controller 110.

Thereby, when the accelerator or the brake is manipulated, the controller 110 controls the speed of the vehicle by accelerating the vehicle or decelerating the vehicle such that the vehicle is stopped.

The data unit 130 stores data produced during the driving of the vehicle, data sensed by a plurality of sensors, and control data according to the mode of the vehicle. Particularly, the data unit 130 stores information about the rate of change of torque, which varies in the sports mode according to the extent of manipulation of the accelerator or the brake.

The controller 110 produces and applies a predetermined command corresponding to a signal input through the input unit 120 such that a set operation is performed. The controller 110 also controls input and output of data such that the operational states of various electronic components are displayed.

In addition, the controller 110 manages the battery 190 through the BMS 180, applies a switching signal to the PRA 160 to control start of the vehicle, and controls supply of power to a specific position (or component).

At this time, the controller 110 receives a signal indicating whether or not the accelerator 140 is manipulated, a signal representing the extent of manipulation of the accelerator, a signal indicating whether or not the brake 150 is manipulated, and a signal for the extent of manipulation of the brake, and applies a control signal to the MCU 170 such that the speed of the vehicle is changed.

The MCU 170 changes the speed of the vehicle by controlling the rate of rotation of the motor according to the control signal from the controller 110.

At this time, in controlling the speed of the vehicle, when the mode key 121 of the input unit 120 is manipulated, the controller 110 switches the mode of the vehicle from the normal driving mode, in which the vehicle is accelerated or decelerated at a constant rate of change of torque, to the sports mode, in which the rate of change of torque varies.

When there is an input from the mode key 121, the controller 110 sets the sports mode, changes the rate of change of torque according to the APS of the accelerator 140 or the BPS of the brake 150, and applies a control signal to the MCU 170. Thereby, the speed of the vehicle is controlled through change of the acceleration of the vehicle.

At this time, the controller 110 changes the rate of change of torque according to the rate of change of the APS or the BPS.

In addition, when the input from the APS or the BPS changes, the controller 110 changes the rate of change of torque again according to the degree of the change of the input, calculates the value of torque according to the changed rate of change of torque, and applies the value to the MCU 170.

At this time, when the rate of change of the APS or the BPS is equal or greater than a reference value, the controller 110 changes the rate of change of torque. When the rate of change of the APS or the BPS is less than the reference value, the established rate of change of torque is maintained.

When there is another input from the mode key 121, the controller 110 releases the acceleration mode and switches to the normal driving mode in which the rate of change of torque is constant to perform normal control of vehicle speed according to manipulation of the accelerator and the brake.

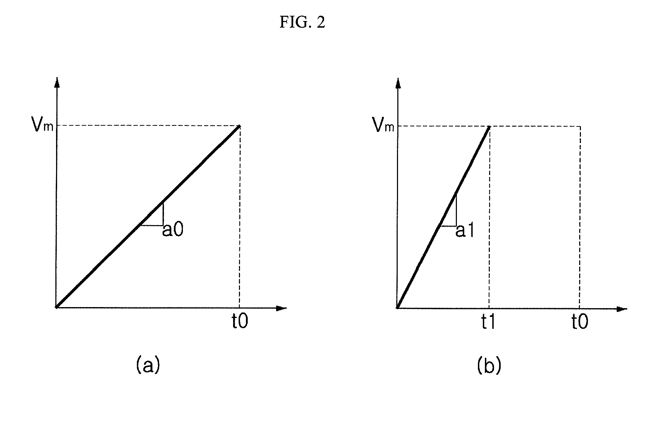

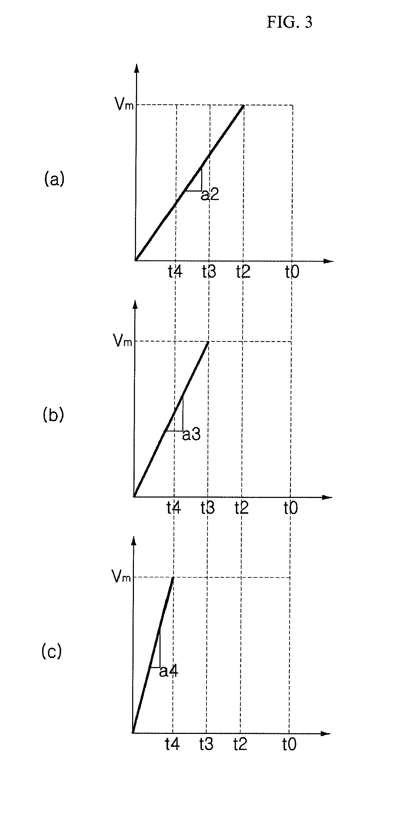

FIGS. 2 and 3 are views illustrating change in torque in respective modes of an EV according to one embodiment of the present invention.

In the normal driving mode of the EV as shown in FIG. 2(a), the speed of the vehicle is controlled at a constant rate of change of torque. That is, when the vehicle is accelerated through manipulation of the accelerator 140, the time taken to reach the target torque Vm is constant.

When the sports mode is set, the rate of change of torque is changed as shown in FIG. 2(b), and thus the time taken to reach the target toque Vm becomes different from that in the normal driving mode. In the sports mode, acceleration performance is enhanced, and thus the time taken to reach the target torque is shortened, compared to the normal driving mode.

In the normal driving mode, the rate of change of torque is a0, and the time taken to reach the target torque Vm is t0. In the sports mode, on the other hand, the rate of change of torque is a1, and the time taken to reach the target torque is t1, which is less than t0.

In FIG. 2, the normal mode is compared with the sports mode. In the sports mode, the rate of change of torque is not simply increased. Rather, the rate of change of torque varies in the sports mode as shown in FIG. 3.

When the sports mode is set, the controller 110 changes the rate of change of torque according to an input for acceleration or deceleration to the APS or the BPS to control the speed of the vehicle as shown in FIGS. 3(a) to 3(c).

The controller 110 changes the rate of change of torque according to the signal value and the rate of change of the APS or the BPS.

At this time, in the case that the signal value of the APS or the BPS is less than a reference value, the controller 110 changes the rate of change of torque to a default value. In the case that the signal value is equal to or greater than the reference value, the controller 110 calculates the rate of change thereof, and sets the rate of change of torque according to the rate of change of the APS or the BPS.

In the case that the rate of change of the APS or the BPS is less than a set value, or decreases, the rate of change of torque is changed to the default value.

For example, when the rate of change of the APS is less than 15 %, the established rate of change of torque is set to the default value. When the rate of change of the APS is between 15 % and 20 %, a first rate of change of torque a1 may be set as shown in FIG. 2(b). When the rate of change of the APS is between 20 % and 25 %, the rate of change of torque may be changed to a second rate of change of torque a2 as shown in FIG. 3(a). When the rate of change of the APS is between 25 % and 30 %, the rate of change of torque may be changed to a third rate of change of torque a3 as shown in FIG. 3(b). When the rate of change of the APS is equal to or greater than 30%, the rate of change of torque may be changed to a third rate of change of torque a4 as shown in FIG. 3(c).

The time taken to reach the target torque according to the respective rates of change of torque is changed from t1 to t4, and the acceleration is changed accordingly.

While the degree of change in the rate of change of torque is illustrated as being divided into four stages, embodiments of the present invention are not limited thereto. Depending upon settings, the rate may be controlled in multiple stages.

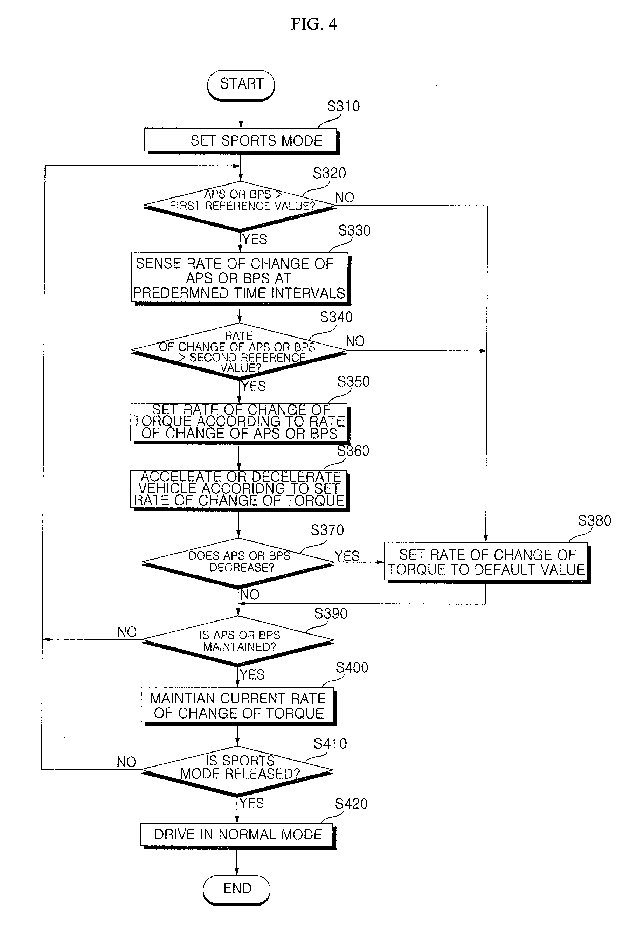

FIG. 4 is a flowchart illustrating operation of an electric vehicle, which is in the sports mode, according to one embodiment of the present invention.

Referring to FIG. 4, during travel of the EV, the controller 110 applies a control signal to the MCU 170 to accelerate the vehicle according to manipulation of the accelerator 140 or decelerate the vehicle according to manipulation of the brake 150, causing the speed of the vehicle to vary. At this time, in the normal driving mode, the vehicle is set to accelerate or decelerate at a constant rate of change of torque.

When there is an input from the mode key 121, the controller 110 changes the driving mode of the vehicle from the normal driving mode to the sports mode (S310).

The controller 110 sets the torque according to an input signal from the APS of the accelerator 140 or the BPS of the brake 150 and applies a control signal to the MCU 170. In the sports mode, the controller 110 changes the rate of change of torque, sets the torque according to the changed rate of change of torque, and applies a control signal to the MCU 170.

When the value of the input signal from the APS or the BPS is less than a first reference value, the controller 110 sets the rate of change of torque to the default value of the sports mode to control the torque (S380).

On the other hand, when the value of the input signal from the APS or the BPS is equal to or greater than the first reference value, the controller 110 senses the rate of change of signals input from the APS or the BPS at predetermined time intervals (S330). The rate of change of the APS or the BPS is the rate of change of increasing values. The rate of change of torque is set according to the instantaneous rate of change of the APS or the BPS.

When the rate of change of the APS or the BPS for a certain time is less than a second reference value, the controller 110 sets the rate of change of torque to the default value of the sports mode to control the torque (S380). The default value may be set to, for example, about 3 N/10 ms.

On the other hand, when the rate of change of the APS or the BPS is equal to or greater than the second reference value, the rate of change of torque is set according to the rate of change of the APS or the BPS (S350). The rate of change of torque is increased or decreased according to the rate of change of the APS or the BPS as shown in FIG. 3.

Once the rate of change of torque is set, the controller 110 sets the torque value for control of the motor based on the set rate of change of torque, and inputs the value to the MCU 170. The MCU 170 controls the motor 171 according to the set value of torque, thereby accelerating or decelerating the vehicle (S360).

At this time, when the change rate of the APS increases, the degree of acceleration increases. When the change rate of the BPS increases, the degree of deceleration increases. That is, as the rate of change of torque increases, the vehicle is quickly accelerated or quickly decelerated.

On the other hand, when the signal value of the APS or the BPS decreases (S370), the rate of change of torque is set to the default value of the sports mode to control the torque (S380).

In case that the signal value of the APS or the BPS is maintained, the current rate of change of torque is maintained (S400).

When the signal value of the APS or the BPS is equal to or greater than the first reference value, and the rate of change thereof is equal to or greater than the second reference value, the rate of change of torque is changed, as discussed above, according to the rate of change of the APS or the BPS to control the torque (S320 to S390).

When there is an input of the mode key 121 in the sports mode, the controller 110 releases the sports mode, switches to the normal driving mode, and controls the speed of the vehicle according to a constant rate of change of torque (S420).

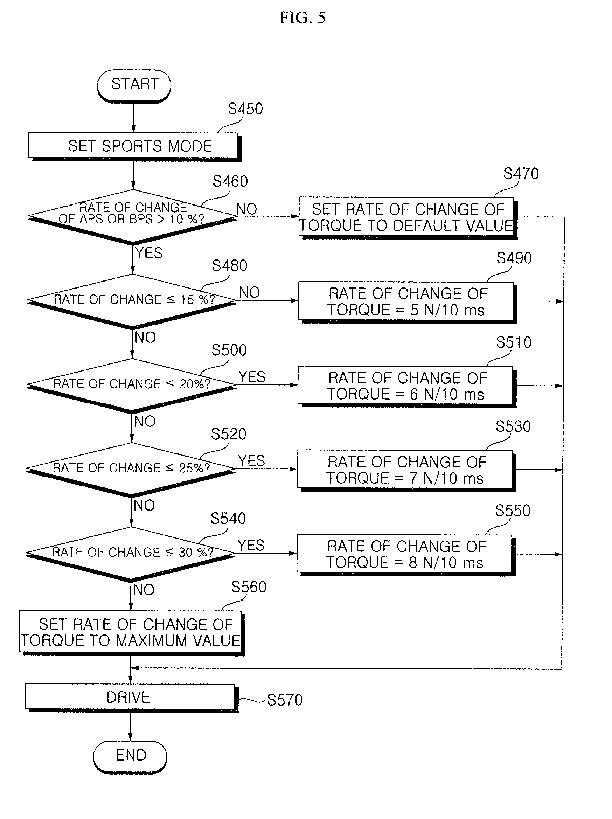

FIG. 5 is a flowchart illustrating a method of setting the rate of change of torque of an electric vehicle according to one embodiment of the present invention.

Referring to FIG. 5, once the sports mode is set (S450), the controller 110 changes the rate of change of torque according to the signal value of the APS or the BPS or the rate of change thereof, thereby controlling the torque. The changed rate of change of torque is applied to both acceleration and deceleration.

When the rate of change of the APS or the BPS is less than 10%, the controller 110 sets the rate of change of torque to the default value (S470).

When the rate of change of the APS or the BPS is equal to or greater than 10% and equal to or less than 15%, the rate of change of torque is set to about 5 N/10 ms, thereby performing control of the torque (S490). That is, the rate of change of torque is set such that 5 N is changed for every 10 ms.

In addition, when the rate of change of the APS or the BPS is between 15% and 20%, the controller 110 changes the rate of change of torque to 6 N/10 ms. That is, as the rate of change of the APS or the BPS increases, the rate of change of torque also increases.

In addition, when the rate of change of the APS or the BPS is between 20% and 25%, the controller 110 changes the rate of change of torque to 7 N/10 ms.

In addition, when the rate of change of the APS or the BPS is between 25% and 30%, the controller 110 changes the rate of change of torque to 8N/10ms.

When the rate of change of the APS or the BPS is equal to or greater than 30%, the rate of change of torque is set to the maximum value. The maximum value may be set equal to or greater than 8 N/10 ms.

The rate of change of torque set according to the rate of change of the APS or the BPS as disclosed above is simply illustrative, and embodiments of the present invention are not limited thereto. The torque may be controlled in multiple stages by subdividing the ranges.

The rate of change of torque is consistently changed according to the signal value of the APS or the BPS and the rate of change thereof in a manner as described above.

The controller 110 calculates the torque according to the signal value of the APS or the BPS based on the set rate of change of torque, and applies the torque value to the MCU 170 to drive the vehicle at a predetermined speed (S570).

Accordingly, the present invention not only performs simple control of acceleration and deceleration, but also varies the rate of change of torque according to mode. Thereby, the present invention may implement dynamic speed control.

Although the preferred embodiments of the present invention have been disclosed for illustrative purposes, the present invention is not limited to the disclosed embodiments. Those skilled in the art will appreciate that various modifications, additions and substitutions are possible, without departing from the scope and spirit of the invention as disclosed in the accompanying claims.

## Claims

1. An electric vehicle comprising
an accelerator provided with an accelerator position sensor (APS);
a brake provided with a break position sensor (BPS);
a motor control unit to control driving of a motor to change a speed of the vehicle; and
a mode key to input a signal for setting of a sports mode;
a controller to control the speed of the vehicle by switching the vehicle, when the mode key is input, from a normal driving mode to the sports mode, changing a rate of change of torque according to an input signal from the APS or the BPS, and applying a calculated value of torque to the motor control unit according to the changed rate of torque, the rate of change of torque forming the basis of setting a value of torque.

2. The electric vehicle according to claim 1, wherein:
the controller changes the rate of change of torque according to a rate of change of the APS or the BPS when a value of the signal from the APS or the BPS is equal to or greater than a reference value; and
the controller sets the rate of change of torque to a default value when the value of the signal from the APS or the BPS is less than the reference value, the default value being a minimum rate of change of torque in the sports mode.

3. The electric vehicle according to claim 2, wherein:
the controller re-sets, when the rate of change of the APS or the BPS increases, the rate of change of torque according to the rate of change of the APS or the BPS; and
the controller maintains, when the value of the signal from the APS or the BPS is maintained, a preset rate of change of torque.

4. The electric vehicle according to claim 2, wherein, when the rate of change of the APS or the BPS is less than a set value or the value of the signal from the APS or the BPS decreases, the controller sets the rate of change of torque to the default value.

5. The electric vehicle according to claim 2, wherein the controller sets the rate of change of torque according to an instantaneous rate of change of the APS or the BPS.

6. A method for controlling a speed of an electric vehicle comprising:
setting a sports mode;
calculating, when a signal input from an accelerator position sensor (APS) of an accelerator or a break position sensor (BPS) of a brake is equal to or greater than a reference value, a rate of change of the APS or the BPS;
changing, when the rate of change of the APS or the BPS is equal to or greater than a set value, the rate of change of torque according to the rate of change of the APS or the BPS; and
setting a target torque according to the changed rate of change of torque to control the speed of the vehicle.

7. The method according to claim 6, wherein the rate of change of torque is set to a default value when the value of the signal from the APS or the BPS is less than the reference value or when the rate of change of the APS or the BPS is less than the set value, the default value being a minimum rate of change of torque in the sports mode.

8. The method according to claim 6, further comprising changing, when the value of the signal from the APS or the BPS decreases, the rate of change of torque to a default value, the default value being a minimum rate of change of torque in the sports mode.

9. The method according to claim 6, wherein:
a preset rate of change of torque is maintained when the value of the signal from the APS or the BPS is maintained; and
the rate of change of torque is re-set according to the rate of change of the APS or the BPS when the rate of change of the APS or the BPS increases.
